# EUROPEAN PATENT SPECIFICATION

(11) **EP 4 455 020 B1**
(45) Date of publication and mention of the grant of the patent: **11.03.2026**
(21) Application number: 23170644.1
(22) Date of filing: 28.04.2023
(51) Int. Cl.: B64D 37/22

(54) **DEVICE AND METHOD FOR REDUCING UNUSABLE FUEL IN A TANK, E.G. OF AN AIRCRAFT, FUEL TANK AND AIRCRAFT**
VORRICHTUNG UND VERFAHREN ZUR REDUZIERUNG VON UNBRAUCHBAREM BRENNSTOFF IN EINEM TANK, Z.B. EINES FLUGZEUGS, KRAFTSTOFFTANK UND FLUGZEUG
DISPOSITIF ET PROCÉDÉ POUR RÉDUIRE LE CARBURANT INUTILISABLE DANS UN RÉSERVOIR, PAR EXEMPLE D'UN AÉRONEF, RÉSERVOIR DE CARBURANT ET AÉRONEF

(43) Date of publication of application: 30.10.2024
(73) Proprietor: Airbus Operations GmbH, 21129 Hamburg (DE)
(72) Inventor: Wesseloh, Marc, 21129 Hamburg (DE); Vollmer, Malte, 21129 Hamburg (DE)
(74) Representative: KASTEL Patentanwälte PartG mbB

(56) References cited:
- GB-A- 2 295 362
- US-A- 4 703 771
- US-A1- 2005 178 880

## Description

The invention relates to a device and to a method for reducing unusable fuel in a tank, preferably of an aircraft. Further, the invention relates to a fuel tank for an aircraft and to an aircraft.

Residuals of fuels in aircraft fuel tanks may cause a growth of microorganisms within the tank, which can block the flow of fuel and cause corrosion, thus affecting both safety and maintenance costs. The intrinsic water content of fuel and atmospheric moisture condensation on fuel tank walls help microbes to flourish. Therefore, a current treatment of the tank is necessary, involving periodic removal of water, cleaning of the tank and the addition of chemicals to the fuel. However, this is costly and not always effective enough.

In addition, in many aircraft tanks elevations are formed at the bottom of the tank which divide the bottom into several bays, in which residuals remain when the tank is emptied. To allow a uniform drainage of the tank, passages may be provided within or between the elevations or walls which separate the different bays from each other. However, such passages within or between the elevations cannot be realized in all types of aircraft tanks. In particular in aircraft tanks which are formed by the fuselage structure of the aircraft, or which are part of the aircraft structure, the elevations at the bottom of the tank are formed by structural parts of the aircraft like e.g. stringers which do not allow the provision of fuel passages.

In particular fuel tanks which are formed by the lower fuselage structure need to be protected by a liner inside the tank. The liner shall reduce the fuel flow after a structural impact. The liner covers the inner side of the bottom wall of the tank formed by the structure including the elevations, and thus leads to a conglomeration of unused fuel in particular in the lower centre area of the tank.

Such a tank may be for example a rear centre tank of an aircraft.

The unused residual fuel remaining in certain areas of the tank causes several disadvantages: First, there is an increased risk of kerosene fungus in the tank. This is even more critical for biofuels called sustainable aviation fuel (SAF) generated by biomass. Secondly, it causes a weight penalty due to an unusable remaining fuel portion, which might by e.g. around 60 to 100 kg or even more. Further, it might increase a risk of not fulfilling requirements dealing with maximum volume of remaining fuel for an empty tank. In addition, it causes a reduced tank capacity of fuel which can be used for propelling the aircraft.

US 4 703 771 A discloses a vehicle fuel tank in which the tank bottom has a protrusion to provide a space for accommodating the frame and other parts of the vehicle under the fuel tank, the protrusion defining a plurality of compartments in the fuel tank. An overhanging siphon having an opening in the top thereof provides communication between compartments. A fuel inlet pipe and a fuel suction pipe are communicated with a first compartment so that the supply of fuel into the fuel tank and the suction of fuel from the fuel tank are conducted through the first compartment. A valve such as a float valve is provided on the siphon opening.

GB 2 295 362 A discloses Vehicle fuel tank arrangement in which two tank portions are interconnected by a bridge at a level above the bases of the tank portions and a syphon tube is provided to allow flow of fuel from one tank portion to the other tank portion. The syphon tube has an aperture through its wall at the highest point of the tube, which point is within the tank, and a float body is associated with the aperture. The body is lifting when the tank is full to open the aperture and dropping as the tank empties to close the aperture.

US 2005/178880 A1 discloses an auxiliary fuel tank systems for an aircraft. The auxiliary fuel tank system includes a master tank assembly and at least one slave tank assembly. The master tank assembly can be removably installed in the fuselage and can include a master tank body configured to pass through a door in the fuselage without disassembly. The slave tank assembly can be removably installed in the fuselage at least proximate to the master tank assembly, and can include a slave tank body configured to hold fuel.

It is the objective of the invention to provide a device for reducing unable fluid in a tank which provides an enhanced performance and safer operation.

Reducing unable fluid in a tank shall in particular reduce the weight of an aircraft and reduce the risk of kerosene fungus in aircraft tanks.

According to a first aspect of, the invention provides a device for reducing unusable fuel in a tank of an aircraft, wherein the bottom of the tank is divided into at least two adjacent bays by at least one separation wall, the device comprising: an overflow pipe configured to be mounted in the tank so that it extends from the bottom of one bay across the separation wall to the bottom of the other bay, and a valve provided in an opening located in an upper section of the overflow pipe, the valve being configured to automatically open when the tank is filled with fuel, to release air from the overflow pipe, and to automatically close when the fuel is extracted from the tank, wherein the valve is configured to automatically close when the air within the overflow pipe has completely left the overflow pipe. Preferably, the valve is configured to automatically open when the fuel pressure in the tank reaches a predefined level to release air from the overflow pipe.

Preferably, the valve comprises a ball for opening and closing the valve, wherein the ball is lifted to open the valve by the pressure of the air within the overflow pipe and lowered to close the valve when the overflow pipe is completely filled with fuel. Preferably, the valve comprises a spring acting on the ball to additionally support closing the valve.

Preferably, the device comprises a fixation member configured for fastening the device to the separation wall so that the ends of the overflow pipe are positioned close to the bottoms of the adjacent bays and the opening provided in the upper section of the overflow pipe is positioned at a higher level than the separation wall.

Preferably two overflow pipes with valves are used per bay to provide redundancy. Preferably several bays are connected in series.

Preferably the overflow pipe is made of a fuel resistant material. It can be made of metal, but it is preferably made as a plastic injection molding part.

Preferably, the valve comprises a valve head that is checkable and repairable. The valve head may be comprised by an upper end of the overflow pipe.

Preferably, the valve is designed in such a way that when the tank is filled, it opens automatically when the fuel pressure reaches a certain level.

Preferably, the overflow pipe forms a bridge between its both ends. Preferably, the position of the bridge and its design take into account the specific aircraft. Moreover, flight conditions as e.g. climb or descent can be considered in the design.

According to a second aspect, the invention provides a method for reducing unusable fuel in a tank, preferably of an aircraft, wherein the bottom of the tank is divided into at least two adjacent bays by at least one separation wall, the method comprising: providing an overflow pipe between two adjacent bays which extends from the bottom of one bay across the separation wall to the bottom of the other bay; completely filling the overflow pipe with fuel when the tank is filled with fuel by automatic opening of a valve connected to an upper opening of the overflow pipe to release air from the overflow pipe; allowing an overflow of fuel across the separation wall by automatic closing of the valve before or when the fuel is extracted from the tank, wherein the valve is automatically closed when air within the overflow pipe has completely left the overflow pipe .

Preferably, the overflow of fuel across the separation wall is driven by the hydrostatic paradox.

Preferably, the valve is closed during the fuel extraction.

For fuel extraction, the air is preferably released from the overflow pipe so that the bridge which is formed by a centre portion of the overflow pipe is completely filled with fuel.

According to a third aspect, the invention provides a fuel tank, preferably for an aircraft, the tank comprising a bottom which is divided into at least two adjacent bays by at least one separation wall, and a device according to the invention.

Preferably, the tank is formed by a structure of an aircraft, wherein the bottom of the tank is formed by a protective liner covering the structure.

Preferably, the structure is a fuselage structure.

According to a fourth aspect, the invention provides an aircraft comprising a fuel tank according to the invention.

By the invention, the weight of the aircraft is reduced and kerosene fungus is avoided. The invention provides an extended flight range. Moreover, no additional technology is needed, like e.g. pumps or similar, and thus the costs are minimized.

The invention solves the objective by reducing the volume of unusable fuel within the tank. The overflow pipe with the valve ensures that this volume remains extremely small and that the available tank volume can be fully used. As a result, the risk of kerosene fungus within the tank is reduced. In addition, weight penalty due to unusable remaining fuel in the tank is avoided. Further, the net tank capacity is increased. Moreover, a risk of not fulfilling any requirements dealing with maximum volume of remaining fuel for an empty tank is avoided.

Characteristics and advantages described herein in relation to the device according to the invention are also related to the method according to the invention and to the fuel tank according to the invention.

In the following, exemplary embodiments of the invention showing further characteristics and advantages are described in detail with reference to the figures, in which:
- **Fig. 1**: shows a cross sectional view of a device according to a preferred embodiment of the invention, together with a section of the bottom of an aircraft tank in which it is installed;
- **Fig. 2**: shows the device depicted in figure 1 in a similar view during tank filling;
- **Fig. 3**: shows the device as depicted in figure 1 when fuel is extracted from the tank;
- **Fig. 4**: shows a portion of the bottom of an aircraft tank comprising several bays equipped with devices as shown in the previous figures; and
- **Fig. 5**: schematically shows an aircraft tank equipped with a number of devices as shown in the previous figures, wherein the fuel flows from one bay to the next when emptying the tank.

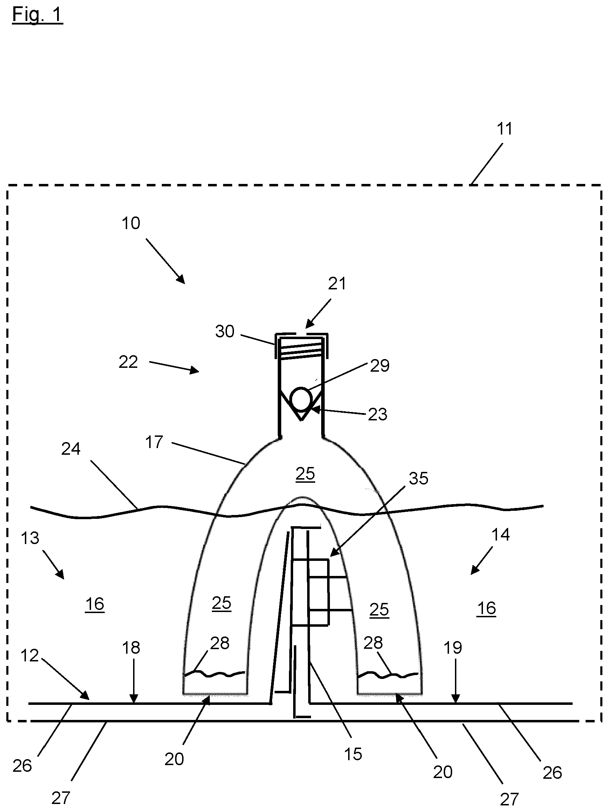

**Fig. 1** shows a device 10 for reducing unusable fuel in a tank 11 of an aircraft. Tank 11 is only schematically indicated by a dotted line. The bottom 12 of tank 11 is divided into a number of adjacent bays 13, 14 by one or more elevations 15 which form separation walls. Each elevation or separation wall 15 may prevent a flow of fuel 16 between the bays 13, 14. The device 10 comprises an overflow pipe 17 which is mounted in tank 11.

The overflow pipe 17 extends from the bottom 18 of bay 13 across the elevation 15 to the bottom 19 of bay 14 which is arranged adjacent to bay 13 and separated from bay 13 by the elevation 15. Both ends 20 of pipe 17 are open and positioned close to the respective bay bottom 18, 19 to allow the fuel 16 at the bottom 18, 19 to flow into the pipe and out of the pipe. The overflow pipe 17 comprises an opening 21 which is located in an upper end section 22 of overflow pipe 17. The opening 21 is connected to a valve 23 which is configured to automatically open when tank 11 is filled with fuel 16 and to automatically close when the fuel 16 is extracted from tank 11.

The overflow pipe 17 is preferably produced by 3D printing or injection molding technology. It may be made of thermoplastic material or of a metal. The diameter of pipe 17 ensures a sufficient amount of flow from one bay to another.

In this embodiment, bottom 12 of tank 11 is formed by a liner 26 which covers a primary structure 27 of the aircraft which forms tank 11. Liner 26 together with the underlying primary structure 27 forms the elevation 15 between the bays 13, 14.

The valve 23 is preferably designed as a ball valve comprising a ball 29. As an option, it may additionally comprise a spring. A fixation member 35 is provided which allows the pipe 17 to be attached to the aircraft structure. The fixation member 35 is for example designed as a bracket.

An inspection and maintenance screw 30 is provided on device 10 to open it in order to open the valve 23 for inspection and/or maintenance work. The upper end section 22 of the overflow pipe 17 comprises a valve head that is checkable and repairable.

When fuel 16 is filled into the empty tank 11, the fuel level 24 in tank 11 increases above elevation 15 and both adjacent bays 13, 14 are filled with fuel 16. Since valve 23 is still closed, as shown in figure 1, the overflow pipe 17 is mainly still filled with air 25 forming an air bubble, and the level 28 of the fuel inside the overflow pipe or tube 17 is still very low compared to the fuel level 24 outside the tube or pipe 17. In this state, no fuel overflow within the overflow pipe 17 is possible.

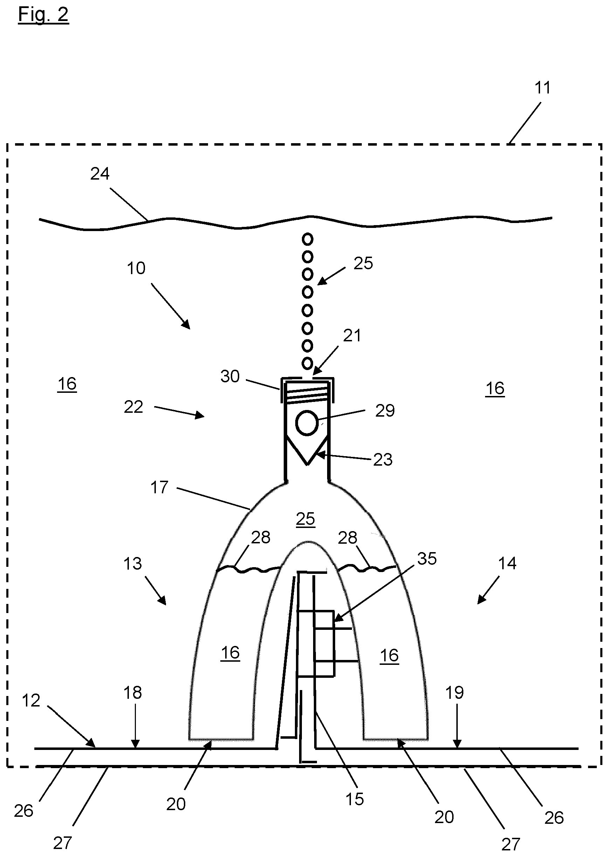

As shown in **Fig. 2****,** valve 23 automatically opens due to the pressure of the fuel 16 in tank 11 when the fuel level 24 is above opening 21. As a consequence, air 25 within pipe 17 is released from overflow pipe 17.

Due to further filling of the tank 11, the fuel level 24 has increased. The increased pressure of air bubble 25 within tube or pipe 17 causes opening of valve 23. The opening pressure is for example 0.05 to 0.08 bar. The air 25 is released as an airflow through the open valve 23 until the air 25 completely left the overflow valve 23. The fluid level 28 inside the tube or overflow pipe 17 increases until the tube 17 is completely filled with fuel. When the fuel level 24 is above the opening 21, the valve 23 closes automatically, since there is no pressure any more within tube 17 which causes the valve to be open.

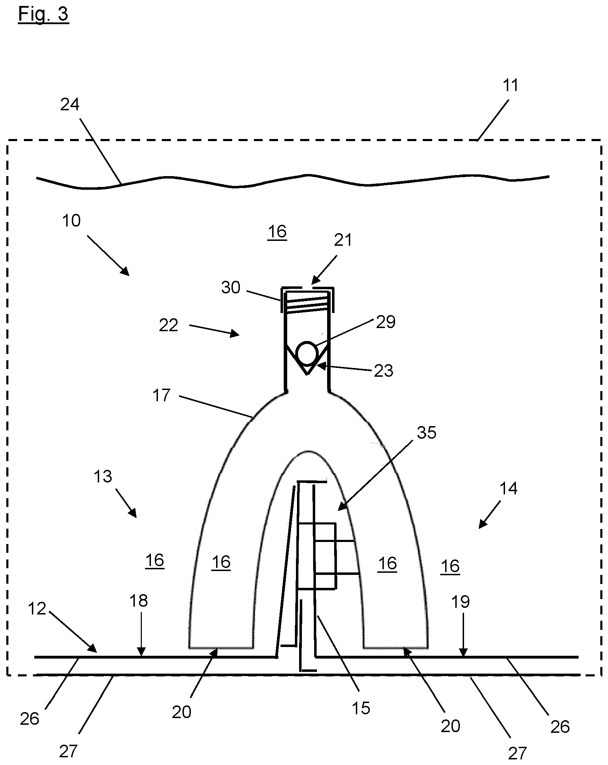

**Fig. 3** shows the state of the device 10 inside fuel tank 11 when the overflow pipe 17 is filled completely with fuel 16 and the valve 23 is closed. When the fuel level 24 decreases and reaches a level below the elevation or separation wall 15, the fuel 16 can flow from one bay to the other through overflow pipe 17 over the elevation 15 for balancing the fuel levels in both adjacent bays 13, 14. In this way, the fuel levels in both bays 13, 14 remain equal until both bays 13, 14 are completely emptied.

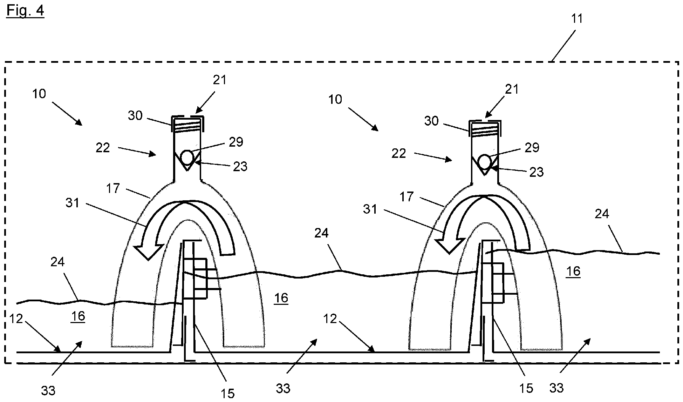

**Fig. 4** shows a section of tank 11 having a number of adjacent bays 33 separated by elevations 15 formed on tank bottom 12, wherein on each elevation 15 an overflow pipe 17 is provided as described above. In this way several bays 33 are connected in series. The overflow pipes 17 are designed to work according to the hydrostatic paradox of tolerance which enables a fuel overflow 31 from one bay to the next. For this purpose, the valves 23 are closed when the fuel 16 is extracted from the tank 11.

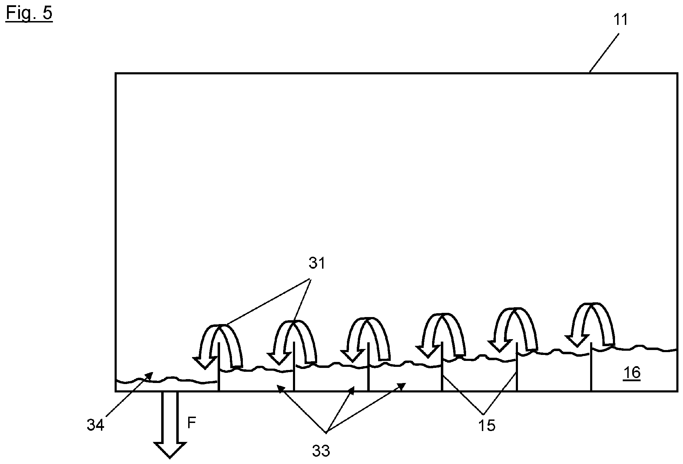

**Fig. 5** shows tank 11 when it is emptied through a fuel extraction bay 34 provided at the tank bottom, as indicated by arrow F. The plurality of bays 33 are provided at bottom 12 of tank 11 by separation walls 15. The different fuel levels due to fuel extraction are balanced by the devices 10 as described above (see Fig. 4). As described with reference to figure 4, the bays 33, 34 are connected in series by the devices 10. The pressure compensation between the bay 34 from which the fuel is taken and the bay 33 next to it results in fuel overflow 31 between the bays with a higher fuel level and the bays with a lower fuel level.

Thus, the fuel 16 is transferred from one bay to the next according to the hydrostatic paradox of tolerance. The overflow pipes 17 form bridges over the separation walls 15

The features and characteristics described above as examples with reference to figure 1 and the following figures apply in the same manner to all figures. In the figures, identical reference numbers are used for similar or identical parts.

### List of reference numbers:

- 10: device
- 11: tank
- 12: bottom of tank
- 13, 14: bays
- 15: elevations / separation walls
- 16: fuel
- 17: overflow pipe
- 18: bottom of bay
- 19: bottom of bay
- 20: ends of overflow pipe
- 21: opening
- 22: upper end section of overflow pipe
- 23: valve
- 24: fuel level in the tank
- 25: air
- 26: liner
- 27: primary structure
- 28: fuel level inside overflow pipe
- 29: ball
- 30: screw
- 31: fuel over flow
- 33: plurality of adjacent bays
- 34: fuel extraction bay
- 35: fixation member

- F: Fuel extraction

## Claims

1. Device for reducing unusable fuel in a tank, preferably of an aircraft, comprising:
an overflow pipe (17) configured to be mounted in a tank (11) which is divided into at least two adjacent bays (13, 14, 33) by at least one separation wall (15),
wherein the overflow pipe (17) is formed to extend from the bottom (18) of one bay (13, 33) of the tank (11) across the separation wall (15) to the bottom (19) of the other bay (14, 33) of the tank (11) when it is mounted in the tank (11),
and a valve (23) provided in an opening (21) located in an upper section (22) of the overflow pipe (17),
the valve (23) being configured to automatically open when the tank (11) is filled with fuel (16), to release air (25) from the overflow pipe (17), and to automatically close when the fuel (16) is extracted from the tank (11),
**characterized in that**
the valve (23) is configured to automatically close when the air (25) within the overflow pipe (17) has completely left the overflow pipe (17).

2. Device according to claim 1, **characterized in that** the valve (23) is configured to automatically open when the fuel pressure in the tank (11) reaches a predefined level to release the air (25) from the overflow pipe (17).

3. Device according to claim 1 or 2, **characterized in that** the valve (23) comprises a ball (29) for opening and closing the valve (23), wherein the ball (29) is lifted to open the valve (23) by the pressure of the air (25) within the overflow pipe (17) and lowered to close the valve (23) when the overflow pipe (17) is completely filled with fuel (16).

4. Device according to claim 3, **characterized in that** the valve (23) comprises a spring acting on the ball (29) to additionally support closing the valve (23).

5. Device according to one of the preceding claims, **characterized by** a fixation member (35) configured for fastening the device (10) to the separation wall (15) so that the ends (20) of the overflow pipe (17) are positioned close to the bottoms (18, 19) of the adjacent bays (13, 14, 33) and the opening (21) provided in the upper section (22) of the overflow pipe (17) is positioned at a higher level than the separation wall (15).

6. Method for reducing unusable fuel in a tank, preferably of an aircraft, wherein the bottom (12) of the tank (11) is divided into at least two adjacent bays (18, 19, 33) by at least one separation wall (15), the method comprising:
providing an overflow pipe (17) between two adjacent bays (18, 19, 33) which extends from the bottom (18, 19) of one bay (13, 14, 33) across the separation wall (15) to the bottom (18, 19) of the other bay (18, 19, 33);
completely filling the overflow pipe (17) with fuel (16) when the tank (11) is filled with fuel (16) by automatic opening of a valve (23) connected to an upper opening (21) of the overflow pipe (17) to release air (25) from the overflow pipe (17);
allowing an overflow (31) of fuel (16) across the separation wall (15) by automatic closing of the valve (23) before or when the fuel (16) is extracted from the tank (11)
**characterized in that**
the valve (23) is automatically closed when air within the overflow pipe (17) has completely left the overflow pipe (17).

7. Method according to claim 6, **characterized in that** the overflow (31) of fuel (16) across the separation wall (15) is driven by the hydrostatic paradox.

8. Fuel tank, preferably for an aircraft, comprising a bottom (12) which is divided into at least two adjacent bays (13, 14, 33) by at least one separation wall (15), and a device (10) according to one of claims 1 to 5.

9. Fuel tank according to claim 8, **characterized in that** the tank (11) is formed by a structure (27) of an aircraft, wherein the bottom (12) of the tank (11) is formed by a protective liner (21) covering the aircraft structure (27).

10. Aircraft, comprising a fuel tank according to claim 8 or 9.

## Patentansprüche

1. Vorrichtung zum Reduzieren von nicht verwendbarem Kraftstoff in einem Tank, bevorzugt eines Flugzeugs, umfassend:
ein Überlaufrohr (17), das dazu konfiguriert ist, in einem Tank (11) montiert zu werden, der durch mindestens eine Trennwand (15) in mindestens zwei benachbarte Abteile (13, 14, 33) unterteilt ist,
wobei das Überlaufrohr (17) so ausgebildet ist, dass es sich von dem Boden (18) eines Abteils (13, 33) des Tanks (11) über die Trennwand (15) zu dem Boden (19) des anderen Abteils (14, 33) des Tanks (11) erstreckt, wenn es in dem Tank (11) montiert ist,
und ein Ventil (23), das in einer Öffnung (21) bereitgestellt ist, die sich in einem oberen Abschnitt (22) des Überlaufrohrs (17) befindet,
wobei das Ventil (23) so konfiguriert ist, dass es automatisch öffnet, wenn der Tank (11) mit Kraftstoff (16) gefüllt wird, um Luft (25) aus dem Überlaufrohr (17) abzulassen, und automatisch schließt, wenn der Kraftstoff (16) aus dem Tank (11) entnommen wird,
**dadurch gekennzeichnet, dass**
das Ventil (23) so konfiguriert ist, dass es automatisch schließt, wenn die Luft (25) innerhalb des Überlaufrohrs (17) das Überlaufrohr (17) vollständig verlassen hat.

2. Vorrichtung nach Anspruch 1, **dadurch gekennzeichnet, dass** das Ventil (23) so konfiguriert ist, dass es automatisch öffnet, wenn der Kraftstoffdruck im Tank (11) ein vordefiniertes Niveau erreicht, um die Luft (25) aus dem Überlaufrohr (17) abzulassen.

3. Vorrichtung nach Anspruch 1 oder 2, **dadurch gekennzeichnet, dass** das Ventil (23) eine Kugel (29) zum Öffnen und Schließen des Ventils (23) umfasst , wobei die Kugel (29) durch den Druck der Luft (25) im Überlaufrohr (17) angehoben wird, um das Ventil (23) zu öffnen, und abgesenkt wird, um das Ventil (23) zu schließen, wenn das Überlaufrohr (17) vollständig mit Kraftstoff (16) gefüllt ist.

4. Vorrichtung nach Anspruch 3, **dadurch gekennzeichnet, dass** das Ventil (23) eine Feder umfasst, die auf die Kugel (29) wirkt, um das Schließen des Ventils (23) zusätzlich zu unterstützen.

5. Vorrichtung nach einem der vorhergehenden Ansprüche, **gekennzeichnet durch** ein Befestigungselement (35), das so konfiguriert ist, dass es die Vorrichtung (10) so an der Trennwand (15) befestigt, dass die Enden (20) des Überlaufrohrs (17) nahe an den Böden (18, 19) der benachbarten Abteile (13, 14, 33) positioniert sind und die im oberen Abschnitt (22) des Überlaufrohrs (17) bereitgestellte Öffnung (21) höher als die Trennwand (15) positioniert ist.

6. Verfahren zum Reduzieren von nicht verwendbarem Kraftstoff in einem Tank, bevorzugt eines Flugzeugs, wobei der Boden (12) des Tanks (11) durch mindestens eine Trennwand (15) in mindestens zwei benachbarte Abteile (18, 19, 33) unterteilt ist, wobei das Verfahren umfasst:
Bereitstellen eines Überlaufrohrs (17) zwischen zwei benachbarten Abteilen (18, 19, 33), das sich von dem Boden (18, 19) eines Abteils (13, 14, 33) über die Trennwand (15) zu dem Boden (18, 19) des anderen Abteils (18, 19, 33) erstreckt;
vollständiges Füllen des Überlaufrohrs (17) mit Kraftstoff (16), wenn der Tank (11) mit Kraftstoff (16) gefüllt wird, durch automatisches Öffnen eines Ventils (23), das mit einer oberen Öffnung (21) des Überlaufrohrs (17) verbunden ist, um Luft (25) aus dem Überlaufrohr (17) abzulassen;
Ermöglichen eines Überlaufs (31) von Kraftstoff (16) über die Trennwand (15) durch automatisches Schließen des Ventils (23), bevor oder wenn der Kraftstoff (16) aus dem Tank (11) entnommen wird,
**dadurch gekennzeichnet, dass**
das Ventil (23) automatisch geschlossen wird, wenn im Überlaufrohr (17) befindliche Luft das Überlaufrohr (17) vollständig verlassen hat.

7. Verfahren nach Anspruch 6, **dadurch gekennzeichnet, dass** der Überlauf (31) von Kraftstoff (16) über die Trennwand (15) durch das hydrostatische Paradoxon angetrieben wird.

8. Kraftstofftank, bevorzugt für ein Flugzeug, mit einem Boden (12), der durch mindestens eine Trennwand (15) in mindestens zwei benachbarte Abteile (13, 14, 33) unterteilt ist, und einer Vorrichtung (10) nach einem der Ansprüche 1 bis 5.

9. Kraftstofftank nach Anspruch 8, **dadurch gekennzeichnet, dass** der Tank (11) durch eine Struktur (27) eines Flugzeugs gebildet wird, wobei der Boden (12) des Tanks (11) durch eine Schutzauskleidung (21) gebildet wird, die die Flugzeugstruktur (27) bedeckt.

10. Flugzeug, umfassend einen Kraftstofftank nach Anspruch 8 oder 9.

## Revendications

1. Dispositif pour réduire le carburant inutilisable dans un réservoir, de préférence d'un aéronef, comprenant :
une conduite de trop-plein (17) configurée pour être montée dans un réservoir (11) divisé en au moins deux compartiments adjacents (13, 14, 33) par au moins une paroi de séparation (15),
la conduite de trop-plein (17) étant formée pour s'étendre depuis le fond (18) d'un compartiment (13, 33) du réservoir (11) en travers de la paroi de séparation (15) jusqu'au fond (19) de l'autre compartiment (14, 33) du réservoir (11) lorsqu'elle est montée dans le réservoir (11),
et une vanne (23) placée dans une ouverture (21) située dans un tronçon supérieur (22) de la conduite de trop-plein (17),
la vanne (23) étant configurée pour s'ouvrir automatiquement lorsque le réservoir (11) est rempli de carburant (16), pour faire sortir l'air (25) de la conduite de trop plein (17), et pour se fermer automatiquement lorsque du carburant (16) est extrait du réservoir (11),
**caractérisé en ce que**
la vanne (23) est configurée pour se fermer automatiquement une fois que la totalité de l'air (25) à l'intérieur de la conduite de trop-plein (17) est sorti de la conduite de trop-plein (17).

2. Dispositif selon la revendication 1, **caractérisé en ce que** la vanne (23) est configurée pour s'ouvrir automatiquement lorsque la pression de carburant dans le réservoir (11) atteint un niveau prédéfini pour faire sortir l'air (25) de la conduite de trop-plein (17).

3. Dispositif selon la revendication 1 ou 2, **caractérisé en ce que** la vanne (23) comprend une bille (29) pour ouvrir et fermer la vanne (23), la bille (29) étant élevée pour ouvrir la vanne (23) par la pression de l'air (25) dans la conduite de trop-plein (17) et abaissée pour fermer la vanne (23) lorsque la conduite de trop-plein (17) est complètement remplie de carburant (16).

4. Dispositif selon la revendication 3, **caractérisé en ce que** la vanne (23) comprend un ressort agissant sur la bille (29) pour contribuer à la fermeture de la vanne (23).

5. Dispositif selon l'une des revendications précédentes, **caractérisé par** un élément de fixation (35) configuré pour fixer le dispositif (10) à la paroi de séparation (15) de sorte que les extrémités (20) de la conduite de trop-plein (17) soient positionnées à proximité des fonds (18, 19) des compartiments adjacents (13, 14, 33) et que l'ouverture (21) située dans le tronçon supérieur (22) de la conduite de trop-plein (17) soit positionnée à un niveau supérieur à celui de la paroi de séparation (15).

6. Procédé de réduction du carburant inutilisable dans un réservoir, de préférence d'un aéronef, dans lequel le fond (12) du réservoir (11) est divisé en au moins deux compartiments adjacents (18, 19, 33) par au moins une paroi de séparation (15), le procédé comprenant :
placer une conduite de trop-plein (17) entre deux compartiments adjacents (18, 19, 33), celle-ci s'étendant depuis le fond (18, 19) d'un compartiment (13, 14, 33) en travers de la paroi de séparation (15) jusqu'au fond (18, 19) de l'autre compartiment (18, 19, 33) ;
remplir complètement la conduite de trop-plein (17) de carburant (16) lorsque le réservoir (11) est rempli de carburant (16) par l'ouverture automatique d'une vanne (23) reliée à une ouverture supérieure (21) de la conduite de trop-plein (17) pour faire sortir l'air (25) de la conduite de trop-plein (17) ;
permettre l'écoulement d'un trop-plein (31) de carburant (16) en travers de la paroi de séparation (15) par la fermeture automatique de la vanne (23) avant que le carburant (16) soit extrait du réservoir (11) ou pendant son extraction
**caractérisé en ce que**
la vanne (23) est automatiquement fermée une fois que la totalité de l'air à l'intérieur de la conduite de trop-plein (17) est sorti de la conduite de trop-plein (17).

7. Procédé selon la revendication 6, **caractérisé en ce que** l'écoulement du trop-plein (31) de carburant (16) en travers de la paroi de séparation (15) est entraîné par le paradoxe hydrostatique.

8. Réservoir de carburant, de préférence pour un aéronef, comprenant un fond (12) qui est divisé en au moins deux compartiments adjacents (13, 14, 33) par au moins une paroi de séparation (15), et un dispositif (10) selon l'une des revendications 1 à 5.

9. Réservoir de carburant selon la revendication 8, **caractérisé en ce que** le réservoir (11) est formé par une structure (27) d'un aéronef, le fond (12) du réservoir (11) étant formé par un revêtement intérieur de protection (21) recouvrant la structure (27) de l'aéronef.

10. Aéronef, comprenant un réservoir de carburant selon la revendication 8 ou 9.
